(19) Europäisches Patentamt
European Patent Office
Office européen des brevets

(11) Numéro de publication : **0 388 250 B1**

(12) **FASCICULE DE BREVET EUROPEEN**

(45) Date de publication du fascicule du brevet : **23.06.93 Bulletin 93/25**

(51) Int. Cl.$^5$ : **C22B 59/00,** C01F 17/00

(21) Numéro de dépôt : **90400547.7**

(22) Date de dépôt : **28.02.90**

(54) **Procédé de traitement de minerais de terres rares.**

(30) Priorité : **03.03.89 FR 8902757**

(43) Date de publication de la demande : **19.09.90 Bulletin 90/38**

(45) Mention de la délivrance du brevet : **23.06.93 Bulletin 93/25**

(84) Etats contractants désignés : **AT BE CH DE DK ES FR GB GR IT LI LU NL SE**

(56) Documents cités :
**EP-A- 0 238 402**
**EP-A- 0 284 504**
**DD-A- 48 194**
**DD-A- 51 027**
**DD-A- 215 300**
**DD-A- 262 845**

(73) Titulaire : **RHONE-POULENC CHIMIE**
**25, quai Paul Doumer**
**F-92408 Courbevoie Cédex (FR)**

(72) Inventeur : **Cailly, Francinet**
**42 à 52, rue Villiers de l'Isle Adam**
**F-75020 Paris (FR)**
Inventeur : **Mottot, Yves**
**14, avenue Salvador Allendé**
**F-93290 Tremblay les Gonesse (FR)**

(74) Mandataire : **Esson, Jean-Pierre et al**
**RHONE-POULENC CHIMIE Service Brevets Chimie 25, quai Paul Doumer**
**F-92408 Courbevoie Cedex (FR)**

**EP 0 388 250 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a trait à un procédé de traitement de minerais de terres rares. Elle concerne plus particulièrement les minerais à faibles teneurs en éléments terres rares.

Actuellement, les principaux minerais de terres rares exploités sont ceux qui contiennent les minéraux porteurs de terres rares tels que monazite, bastnaésite et xénotime. A côté de ces minerais les plus riches en terres rares, il existe de nombreux minerais pauvres dont l'exploitation et le traitement ne sont pas actuellement rentables. Citons notamment les minerais contenant des apatites, lesquels minerais ont une teneur pondérale de terres rares exprimée en oxydes inférieure à 0,1 %.

Lorsque le minerai a une faible teneur en éléments terres rares, il est nécessaire de procéder à son enrichissement en le soumettant à un traitement physique : gravimétrie, flottation ou séparation magnétique. Un tel procédé qui s'ajoute au traitement chimique nécessaire pour récupérer les éléments terres rares, s'avère coûteux et grève l'économie du procédé.

A titre d'exemple, on a proposé dans le brevet DD 51027 de récupérer les terres rares contenues dans un laitier de four à phosphore (sous-produit à base de silicate de calcium provenant de la fabrication par électrothermie du phosphore élémentaire, à partir notamment des minerais de type apatites) selon un procédé consistant à attaquer par de l'acide nitrique ledit laitier, puis à récupérer les terres rares dissoutes dans la solution d'attaque au moyen d'une extraction liquide-liquide classique.

De manière à diminuer les coûts élevés engendrés par l'emploi d'acide nitrique, on indique dans ce document que la solution d'attaque qui a été épurée en terres rares et qui est essentiellement constituée alors de nitrate de calcium, est ensuite transformée en engrais, c'est à dire des produits valorisables dont la vente serait susceptible de couvrir les coûts de l'attaque à l'acide nitrique.

Un des objectifs de la présente invention est de fournir un procédé économique de récupération de terres rares à partir du minerai les contenant selon un procédé susceptible d'éviter ou de limiter l'enrichissement préalable dudit minerai.

Un autre objectif de la présente invention est de disposer d'un procédé convenant au traitement de tout type de minerais ou de résidus contenant des éléments terres rares, quelle que soit leur concentration.

Ainsi, la présente invention a pour objet un procédé de traitement d'un minerai de terres rares permettant la récupération desdites terres rares, du type consistant :

(1) à effectuer la lixiviation du minerai de terres rares à l'aide d'une solution d'acide nitrique de telle sorte que l'on solubilise le minéral porteur de terres rares,

(2) à séparer les résidus insolubles si nécessaire,

(3) à séparer les terres rares de la solution issue de l'étape de lixiviation,

et caractérisé en ce qu'il comprend en outre les étapes suivantes :

(4) on traite la solution épurée en terres rares par un hydroxyde d'un cation métallique M, ledit cation présentant un sel nitrate soluble et un sel sulfate difficilement soluble, ce qui conduit à la précipitation des impuretés qui ont été solubilisées à l'étape de lixiviation en même temps que le minéral porteur de terres rares, puis on sépare ledit précipité,

(5) puis on traite la solution débarrassée des impuretés par l'acide sulfurique, ce qui conduit à la précipitation d'un sulfate du cation métallique, puis on sépare ledit précipité,

(6) et enfin on recycle l'acide nitrique ainsi régénéré à l'étape (1) d'attaque du minerai de terres rares.

Les aspects particuliers de l'invention sont indiqués dans les revendications subsidiaires.

L'expression "terres rares" (TR) utilisée conformément à l'invention comprend les éléments terres rares appelés lanthanides ayant des numéros atomiques de 57 à 71 inclus et l'yttrium de numéro atomique égal à 39. De plus, on désigne par "terres rares cériques", les éléments les plus légers commençant avec le lanthane et s'étendant au samarium conformément au numéro atomique et par "terres rares yttriques", les éléments les plus lourds des terres rares commençant par l'europium et finissant par le lutécium et comprenant l'yttrium.

L'intérêt du procédé de l'invention est qu'il peut être mis en oeuvre directement sur le minerai sans nécessiter un enrichissement physique du minerai.

Le procédé de l'invention, comme tous les procédés directs d'attaque de minerais, requiert une consommation importante d'acide nitrique en raison de la faible teneur en éléments terres rares valorisables et de la solubilité partielle de la gangue minérale.

Toutefois, le procédé de l'invention est particulièrement intéressant d'un point de vue économique car l'acide nitrique est régénéré dans le procédé de l'invention. Globalement, la consommation d'acide dans le procédé se ramène à la consommation de l'acide sulfurique utilisé pour la régénération de l'acide nitrique ce qui est économiquement avantageux, en raison du coût nettement inférieur de l'acide sulfurique par rapport à celui de l'acide nitrique.

Si l'acide sulfurique était utilisé pour conduire la lixiviation à la place de l'acide nitrique, il y aurait des pertes

d'éléments terres rares par entraînement dans le précipité formé (par exemple gypse) lors de l'attaque ou par précipitation de sulfates peu solubles de ces éléments.

Par contre, la mise en oeuvre de l'acide nitrique permet de récupérer quantitativement les terres rares solubilisables.

Le procédé de l'invention permet donc de bénéficier des avantages de la dissolution nitrique au prix de l'acide sulfurique.

D'un point de vue écologique, le procédé n'apporte pas une pollution des effluents, par l'anion nitrate. Grâce à la boucle de recyclage, le procédé de l'invention peut ne comporter que des sorties solides bien identifiées et banalisées, donc sans dommage pour l'environnement.

Enfin, un autre avantage du procédé de l'invention est qu'il permet de traiter tout type de minerais ou de résidus contenant des terres rares.

Le procédé de l'invention peut s'appliquer sur tout type de minerais et plus particulièrement aux minerais ayant une faible teneur en terres rares représentant moins de 0,1 % exprimés en poids d'oxydes.

Il est évident que l'on ne sortira pas du cadre de la présente invention en opérant sur des concentrés de minerais dont le procédé d'obtention est bien connu, par exemple par enrichissement à l'aide de techniques physiques, broyage et flottation et/ou concentration par gravité sur des tables à secousses et/ou par séparation magnétique et/ou tout autre technique physique ou chimique.

Il est également possible de mettre en oeuvre un minerai ayant subi un prétraitement thermique.

Dans le cas de minerais pauvres en terres rares, on fait appel, de préférence, à un minerai ayant une gangue en partie insoluble dans l'acide nitrique et l'on peut citer le quartz et les silicates, la magnétite, l'anatase, le rutile, l'ilménite, les grenats et les zircons.

Comme minerais convenant bien à la mise en oeuvre de l'invention, on peut mentionner les minerais dont les porteurs de terres rares sont des phosphates, des fluocarbonates, des carbonates ou des silicates.

A titre d'exemples de minerais, on peut citer les minerais suivants dont on a ci-après précisé la teneur pondérale moyenne en terres rares exprimée en oxydes de terres rares :

- les minerais de type phosphate tels que les apatites où les terres rares sont incluses dans le réseau de phosphate de calcium $Ca_5(PO_4)_3$ (F, Cl, OH) (10 %) ; la rhabdophanite $TRPO_4,H_2O$ (60 %) ; la churchite $TRPO_4,H_2O$ (50 %), les terres rares étant essentiellement des terres rares yttriques ; la famille des crandallites, par exemple la florencite $TRAl_3(PO_4)_2(OH)_6$ (30 %) ;
- les minerais de type fluocarbonate, par exemple la bastnaésite $TRCO_3F$ (75 %), la synchisite $TRCa(CO_3)_2F$ (52 %) ;
- les minerais de type carbonate, notamment le lanthanite $TR_2(CO_3)_3,8H_2O$ (55 %) ;
- les minerais de type silicate, notamment l'allanite $(TRCa)_2(FeAlMg)_3(SiO_4)(Si_2O_7)O(OH)$ (25 %), la britholite $TR_3Ca_2(SiO_4)_3OH$ (60 %).

Le procédé de l'invention convient tout-à-fait bien pour le traitement des apatites.

Si l'on met en oeuvre dans le procédé de l'invention, un minerai du type fluocarbonate, il y a lieu de prévoir auparavant un traitement thermique dudit minerai afin de faciliter son attaque et d'éliminer l'anion carbonate et, d'une manière partielle, l'anion fluorure.

L'opération de calcination est effectuée à haute température, plus précisément à une température supérieure à 400°C, mais choisie de préférence entre 600°C et 800°C. La durée de calcination qui dépend de la température de calcination et qui est d'autant plus courte que la température est élevée, dure généralement entre 30 minutes et 3 heures.

Il est également possible de traiter selon le procédé de l'invention, toute forme de résidu qu'il soit sous forme solide ou liquide.

C'est ainsi que l'on peut mettre en oeuvre des résidus contenant des terres rares sous forme salifiée (phosphates, carbonates ou sulfates) ou de résidus (poudres, copeaux, fragments, lingots, poussières, etc...) qui résultent le plus souvent de la fabrication d'aimants du type TR/Co, la terre rare étant essentiellement le samarium ou TR/Fe/B, la terre rare étant essentiellement le néodyme et le pourcentage atomique des éléments étant généralement le suivant : de 8 à 30 % pour la terre rare ; de 2 à 28 % pour le bore et le complément en fer.

Comme mentionné ci-dessus, il est également possible de traiter selon le procédé de l'invention, les rejets d'exploitation des mines de fer contenant encore des oxydes de fer et de l'apatite. Dans pareil cas, il est souhaitable avant de mettre en oeuvre le procédé de l'invention, d'éliminer la magnétite, par séparation magnétique, technique bien connue dans le domaine considéré.

Le procédé convient également pour le traitement des résidus de dissolution de gypse, notamment des gypses issus de l'attaque sulfurique des minerais de phosphates, et les boues obtenues lors de l'étape de concentration des acides bruts.

La liste des minerais et résidus cités précédemment n'est en aucun cas limitative. Dans l'exposé qui suit

de l'invention, on désignera par "minerai", aussi bien un minerai qu'un résidu contenant des terres rares.

Conformément au procédé de l'invention, on réalise dans la première étape du procédé, un traitement du minerai à l'aide d'acide nitrique.

Avant l'attaque acide, une opération de concassage et/ou de broyage peut s'avérer intéressante afin de libérer l'espèce minérale porteuse des terres rares. La granulométrie dépend de la maille de libération qui peut varier entre quelques microns généralement 4 à 5 µm et 2 mm. Toutefois, si l'on désire une attaque assez rapide, il est avantageux de mettre en oeuvre des particules ayant un diamètre inférieur à 1 mm.

Les opérations de concassage et de broyage peuvent être conduites d'une manière classique, par exemple, dans un concasseur à mâchoires ou dans un broyeurs à boulets ou à barres.

Après cette opération facultative, on soumet le minerai à un traitement à l'acide nitrique qui est destiné à attaquer partiellement le minerai. Plus précisément, ledit traitement permet de solubiliser les minéraux porteurs de terres rares tout en laissant la gangue minérale essentiellement sous forme insoluble. Il y a certes solubilisation d'impuretés de type cationique (aluminium, fer, calcium) ou anionique (phosphate, fluorure, carbonate), mais celles-ci sont éliminées dans une étape subséquente du procédé de l'invention.

Pour effectuer cette lixiviation du minerai, on peut faire appel à l'acide nitrique concentré ou dilué. La concentration de la solution d'acide nitrique n'est pas critique, mais il est souhaitable de mettre en oeuvre une solution aqueuse d'acide nitrique ayant une normalité de 1 à 8 N.

La quantité d'acide nitrique utilisée est fonction de la teneur en terres rares du minéral et de la teneur en autres espèces solubles dans les conditions retenues. Elle est donc de préférence au moins égale à la quantité stoechiométrique des éléments à solubiliser.

De bonnes conditions d'attaque sont réalisées lorsque l'acide nitrique est utilisé en excès par rapport à la stoechiométrie. Cet excès peut atteindre, par exemple 20 % de la quantité stoechiométrique mais il est préférable qu'il soit compris entre 5 et 10 %.

Le rapport pondéral entre le minerai et la solution aqueuse d'acide nitrique est généralement inférieur ou égal à 2 et supérieur ou égal à 0,2, de préférence compris entre 1 et 2.

Une variante du procédé de l'invention consiste à traiter le minerai de terre rare par de l'acide nitrique, en présence d'un sel apportant des ions nitrate.

Comme exemples de sels, on peut citer le nitrate d'ammonium, un nitrate de métal alcalin, par exemple, le nitrate de sodium ou un nitrate d'un cation métallique M.

On définit par cation métallique M, un élément métallique caractérisé par le fait que son hydroxyde est une base forte et qu'il présente un sel nitrate soluble et un sel sulfate difficilement soluble.

Par base forte, on entend une base ayant un pka supérieur à environ 9,0.

Par sel soluble, on entend une solubilité dans l'eau à 20°C supérieure à environ 100 g par litre.

Par sel difficilement soluble, on entend une solubilité dans l'eau à 20°C inférieure à environ 2 g par litre.

Comme cation métallique M convenant à l'invention, on fait appel, de préférence, aux métaux alcalino-terreux tels que calcium, strontium, baryum. On choisit plus particulièrement le calcium en tant que cation métallique M.

A titre de sels apportant des ions nitrate, on fait appel de préférence à un nitrate d'un cation métallique M car ledit cation intervient dans une étape subséquente au procédé de l'invention.

La quantité de sel apportant les ions nitrate peut représenter de 1 à 80 % de la solution nitrique de lixiviation, de préférence entre 40 et 60 %.

Un des avantages de la mise en oeuvre d'un sel apportant des ions nitrate est d'abaisser la teneur en sulfate du cation métallique M présent dans l'acide nitrique recyclé.

Le choix de la mise en oeuvre de cette variante d'exécution de l'attaque est particulièrement recommandé lorsque l'on choisit un mode de séparation des terres rares présentes dans la solution nitrique issue de l'étape de lixiviation, par extraction liquide-liquide telle que précisée ci-après. En effet, la présence du sel neutre facilite l'extraction des terres rares dans la phase organique.

Pour que l'extraction soit satisfaisante, la phase aqueuse en contact avec la phase organique au moment de l'extraction doit présenter une concentration élevée en ions nitrate, de préférence supérieure à 3 moles/litre et inférieure à 10 moles/litre. Elle est choisie avantageusement aux environs de 8 moles/litre.

La quantité de sel apportant les ions nitrate est ajustée de telle sorte que l'on obtienne la concentration en ions nitrate souhaitée.

Que la lixiviation soit effectuée avec l'acide nitrique seul ou en présence d'un sel, les conditions de température ne sont pas déterminantes et la température peut être choisie entre 15°C et 100°C.

Le temps de séjour dans la solution de lixiviation dépend dans une certaine mesure du minerai. Il peut varier largement par exemple de 10 minutes à 5 heures, mais est compris, de préférence, entre 30 minutes et 2 heures.

En fin d'opération, la solution aqueuse de nitrates de terres rares est séparée d'un résidu solide selon une

technique classique de séparation liquide-solide, par exemple par filtration, centrifugation, décantation ou essorage.

On sépare donc un résidu solide constitué essentiellement de gangue minérale constituée des minéraux insolubles dans les conditions de l'attaque, par exemple, silice (quartz) et/ou silicates naturels (feldspath) et minéraux divers.

On récupère, suite à la séparation dudit résidu, une solution aqueuse de nitrates de terres rares qui contient également les impuretés solubilisées lors de l'attaque et qui dépendent donc de la composition du minerai de départ. A titre d'exemples, on peut préciser la nature des impuretés prépondérantes présentes lors du traitement d'une fluorapatite : les impuretés anioniques sont les anions phosphate, arséniate, fluorure et les cations $U^{4+}$, $Th^{4+}$, $Fe^{3+}$, $Al^{3+}$, $Ca^{2+}$, etc...

Dans l'étape suivante du procédé de l'invention, on effectue à partir de ladite solution, la séparation des éléments terres rares.

Cette séparation peut être conduite selon tous les procédés mis à la disposition de l'homme de métier tels que par exemple, précipitation, extraction liquide-liquide, séparation par échanges d'ions par passage sur résines, cristallisation, etc...

Un mode de réalisation préférentiel de l'invention consiste à effectuer la séparation des terres rares par précipitation sous forme de leur hydroxyde.

Ce procédé de séparation convient particulièrement bien dans le cas de minerais non phosphatés et contenant peu de fer ou d'aluminium solubles, de préférence moins de 20 % desdits éléments exprimés par rapport au poids de terres rares.

A cet effet, on effectue la précipitation à l'aide d'une base qui peut être notamment un hydroxyde d'ammonium, de métal alcalin comme sodium, potassium ou de métal alcalino-terreux, de préférence calcium ou magnésium ou un carbonate de ces éléments.

On met en oeuvre, plus préférentiellement, l'hydroxyde de calcium ou son précurseur, l'oxyde de calcium.

La quantité de base mise en oeuvre est déterminée de telle sorte que le pH de la solution contenant les nitrates de terres rares soit compris entre 7 et 10 et, de préférence, aux environs de 8.

Durant cette étape, la température peut varier entre 20°C et 100°C, mais elle est avantageusement comprise entre 60°C et 100°C.

Dans pareilles conditions de traitement, il y a précipitation des terres rares qui peuvent être séparées selon les techniques classiques de séparation liquide-solide.

Une autre variante d'exécution encore plus préférentielle de l'invention consiste à séparer les terres rares selon une opération d'extraction liquide-liquide.

La séparation des terres rares est effectuée par extraction liquide-liquide entre la phase aqueuse contenant les nitrates de terres rares et une phase organique contenant un agent d'extraction insoluble dans l'eau puis contre-extraction des terres rares de la phase organique.

L'agent d'extraction mis en oeuvre dans le procédé de l'invention peut être choisi parmi tous les agents d'extraction présentant une sélectivité pour les terres rares.

L'agent d'extraction mis en oeuvre peut être choisi parmi la classe des agents d'extraction anioniques, celle des agents d'extraction solvatants ou celle des agents d'extraction cationiques.

Les agents d'extraction anioniques mis en oeuvre sont notamment les composés organiques à longue chaîne comportant des fonctions amines.

Les chaînes hydrocarbonées de ces composés ayant de préférence, entre environ 5 et 20 atomes de carbone.

Parmi ceux-ci on peut citer par exemple :

- les amines tertiaires et notamment les produits commercialisés sous les marques Alamine 336 et Adogen 364 qui sont constitués d'amines tertiaires de formule $R_3N$ dans laquelle le radical hydrocarboné R a de 8 à 10 atomes de carbone,
- les nitrates d'ammonium quaternaires et en particulier les produits dérivés des produits commercialisés sous les marques Adogen 464 et Aliquat 336 qui sont constitués de sels d'ammonium quaternaires de formule :

$$[R_3N - CH_3]^+ Cl^-$$

dans laquelle le radical hydrocarboné R a de 8 à 10 atomes de carbone.

Les agents d'extraction cationiques mis en oeuvre sont notamment les acides organo-phosphorés ; les acides carboxyliques ; les β-dicétones.

Parmi ceux-ci, on citera :

- les acides organo-phosphorés de formule générale :

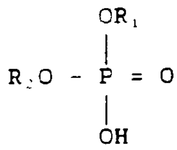 ou 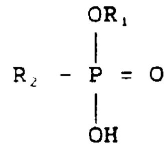 ou 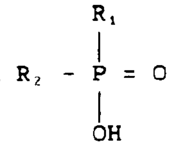

dans lesquelles $R_1$ et $R_2$ représentent des radicaux hydrocarbonés aliphatiques ou aromatiques tels que le nombre total d'atomes de carbone de ces groupements soit au moins égal à 10. On préfère mettre en oeuvre l'acide di(éthyl-2 hexyl) phosphorique et l'acide bis (éthyl-2 hexyl) phosphonique ;

- les acides carboxyliques commercialisés par la Société SHELL Chemicals sous la dénomination "VERSATIC" et qui répondent à la formule générale :

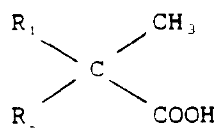

dans laquelle $R_1$ et $R_2$ sont des radicaux hydrocarbonés substitués ou non, et, en particulier, l'acide "Versatic 10" (marque déposée) dérivé du procédé Shell de carboxylation d'oléfines en $C_9$ et pour lequel $R_1$ et $R_2$ sont des radicaux hydrocarbonés dont la somme des atomes de carbone des deux radicaux est égale à 7 ;

Les agents d'extraction anioniques ou cationiques peuvent être utilisés pour extraire et séparer les terres rares à partir de la solution aqueuse issue à l'étape de lixiviation. Toutefois, dans ce cas, il est souhaitable d'effectuer une pré-neutralisation à l'aide d'une base choisie parmi les bases précitées pour effectuer la précipitation des terres rares.

On met en oeuvre, de préférence, l'hydroxyde du cation métallique M. Le pH de la phase aqueuse est alors supérieur à 1.0. Il dépend de l'agent d'extraction.

C'est pourquoi, l'on préfère selon l'invention mettre en oeuvre un agent d'extraction solvatant qui ne requiert pas de pré-neutralisation.

Un mode de réalisation préférentiel de l'invention consiste à séparer les terres rares par extraction liquide-liquide en mettant en contact la solution aqueuse issue de l'étape de lixiviation avec une phase organique contenant à titre d'agent d'extraction, un composé organophosphoré neutre.

L'extraction est réalisée au moyen d'un composé organophosphoré neutre substantiellement insoluble dans l'eau et choisi parmi les quatre classes suivantes :

les phosphates 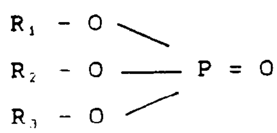 (I)

les phosphonates 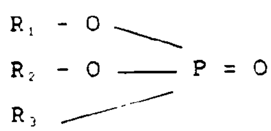 (II)

les phosphinates 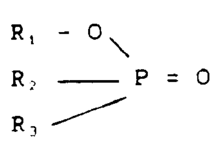 (III)

les oxydes de phosphine 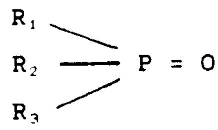 (IV)

dans les formules (I) à (IV), $R_1$, $R_2$ et $R_3$ représentent des radicaux hydrocarbonés tels que des radicaux aliphatiques, cycloaliphatiques et/ou aromatiques.

Lesdits radicaux peuvent contenir de 1 à 18 atomes de carbone mais de préférence, au moins l'un des radicaux doit avoir au moins 4 atomes de carbone.

Les agents d'extraction de formule (I) à (IV) peuvent être utilisés seuls ou en mélange.

Parmi ces composés, on met notamment en oeuvre selon l'invention, ceux qui sont disponibles industriellement comme le tri-n-butylphosphate (TBP), le tri- isobutylphosphate (TIBP), le dibutylbutylphosphonate (DBBP), le di- (éthyl- 2 hexyl) éthyl- 2 hexylphosphonate (DEHEHP), l'oxyde de tri- n- octylphosphine (TOPO).

Dans le procédé de l'invention, on fait appel de préférence au tributylphosphate ou au dibutylbutylphosphonate.

La phase organique selon le procédé de l'invention contient éventuellement outre l'agent d'extraction, un diluant organique. Comme diluants susceptibles d'être utilisés, on peut mettre en oeuvre ceux habituellement mis en oeuvre pour réaliser des opérations d'extraction liquide-liquide. Parmi ceux-ci, on peut citer les hydrocarbures aliphatiques comme par exemple, le dodécane et les coupes pétrolières du type kérosène, les hydrocarbures aromatiques comme par exemple, les coupes pétrolières constituées de mélange d'alkylbenzènes notamment les coupes du type Solvesso commercialisées par la Société EXXON.

On peut également utiliser un mélange de ces diluants.

On fait appel, de préférence, aux coupes pétrolières du type kérosène.

La proportion de l'agent d'extraction dans la phase organique varie avec l'agent d'extraction dans de larges limites.

Sa concentration peut varier de 5 % en volume lorsque l'agent d'extraction est en solution dans un diluant jusqu'à 100 % lorsque l'agent est utilisé pur.

Une proportion comprise entre 50 et 80 % en volume est avantageuse lorsque l'on fait appel au tributylphosphate ou au dibutylbutylphosphonate, agents d'extraction préférés de l'invention.

La phase organique selon le procédé de l'invention peut également contenir divers agents modifieurs dont un des buts essentiels est d'améliorer les propriétés hydrodynamiques du système sans altérer les propriétés complexantes de l'agent d'extraction. Parmi les composés convenant bien, on peut citer notamment, les composés à fonction alcool et, en particulier, les alcools lourds dont le nombre d'atomes de carbone est compris entre 4 et 15. Une proportion pouvant atteindre 20 % en volume rapportée à la phase organique est généralement favorable.

On opère la séparation de la ou des terres rares en opérant à contre-courant sur plusieurs étages théoriques d'extraction, chaque étage étant constitué par l'opération mélange-décantation.

On met en contact la phase aqueuse et la phase organique à une température qui ne présente aucun caractère critique ; elle est choisie généralement entre 15°C et 65°C et est le plus souvent comprise entre 20°C et 50°C.

L'étape de séparation conduit à l'obtention d'une part, d'une solution aqueuse qui contient le ou les éléments non extraits de la solution d'attaque à savoir principalement le fer, l'aluminium, le calcium et la majeure partie des phosphates, arséniates, fluorures, borates, etc... et une phase organique contenant les terres rares, l'uranium solubilisé, de l'acide nitrique et de faibles quantités d'acides correspondant aux anions phosphate, arséniate, fluorure s'ils sont présents dans le minerai traité. Il en est ainsi dans le cas du traitement d'une apatite.

Pour améliorer la pureté de la solution de terres rares obtenues, il est souhaitable d'effectuer avant l'étape de réextraction, une étape de lavage.

Dans cette étape de lavage, la phase organique est lavée avec une solution basique.

Il est possible de faire appel à une solution d'ammoniaque ou de tout autre hydroxyde de métal alcalin ou à leur carbonate. Toutefois, comme il est préférable de ne pas introduire d'autres cations métalliques, on fait appel à l'hydroxyde ou au carbonate du cation métallique M utilisé dans l'étape suivante du procédé de l'invention qui est, de préférence, un hydroxyde de métal alcalino-terreux, en particulier un hydroxyde de calcium.

La concentration de la solution de base est choisie inférieure à environ 8 N, de préférence, comprise entre 1 N et 2 N.

Cette étape de lavage permet de purifier la phase organique en éliminant les impuretés de type acide qui

passent en phase aqueuse.

On effectue ensuite une étape de réextraction des terres rares contenues dans le solvant d'extraction.

On sépare les terres rares extraites dans la phase organique par mise en contact de cette dernière avec de l'eau ou éventuellement une solution diluée d'acide nitrique, inférieure à environ 0,3 N.

Dans le cas où le minerai de départ contient également de l'uranium , celui-ci va se trouver extrait avec les terres rares dans la phase organique. Il est possible d'effectuer la réextraction de l'uranium par mise en contact de la phase organique avec une solution d'un carbonate de métal alcalin ou d'ammonium ayant une concentration comprise de préférence entre 0,5 et 2 moles/litre, après l'étape de réextraction des terres rares.

A partir de la phase aqueuse de nitrates de terres rares récupérées à l'étape de régénération du solvant organique, il est possible de précipiter les terres rares sous forme de leur hydroxyde à l'aide d'une solution basique à un pH voisin de 8. Il est possible de faire appel à une solution d'ammoniaque mais il est préférable de mettre en oeuvre l'hydroxyde du cation métallique M car ainsi après séparation des hydroxydes de terres rares, la phase aqueuse obtenue peut être recyclée pour la préparation de la solution de lavage ou pour la purification de la solution épuisée en éléments terres rares.

On effectue ensuite un traitement de purification de la solution aqueuse épurée en terres rares afin d'éliminer les espèces solubilisées lors de l'attaque. On peut citer notamment le fer, le phosphore, l'aluminium, l'arsenic...

A cet effet, ladite solution est soumise à un traitement à l'aide d'un hydroxyde ou d'un carbonate d'un cation métallique M tel que défini précédemment ou éventuellement un précurseur (oxyde).

Comme exemples d'hydroxydes de cation métallique M, on peut mettre en oeuvre un hydroxyde de métal alcalino-terreux tel que calcium, baryum, strontium.

On met en oeuvre préférentiellement l'hydroxyde de calcium ou son précurseur l'oxyde de calcium. On peut donc faire appel à l'hydroxyde de calcium ou l'oxyde de calcium sous forme de poudre ou de suspension aqueuse.

L'opération peut être réalisée à une température variant entre 20°C et 100°C, mais elle est comprise de préférence entre 70°C et 90°C.

La quantité d'hydroxyde de cation M est déterminée de telle sorte que le pH obtenu soit compris entre 9 et 11, de préférence aux environs de 10.

On introduit l'hydroxyde du cation M dans la solution épurée en terres rares. L'addition peut être effectuée en continu ou en discontinu progressivement ou en une seule fois.

La durée séparant l'addition de l'hydroxyde du cation M et la séparation du précipité pour un procédé discontinu ou le temps de séjour pour un procédé continu, peut varier dans de larges limites, par exemple, de 10 minutes à 10 heures mais est avantageusement compris entre 1 et 3 heures.

Le précipité obtenu contenant les impuretés à éliminer est séparé du milieu réactionnel selon les techniques classiques de séparation liquide-solide : filtration, décantation, essorage et centrifugation.

La phase liquide est constituée par une solution contenant le nitrate du cation M, de préférence le nitrate de calcium.

Dans la dernière étape du procédé de l'invention, on effectue la régénération de l'acide nitrique en traitant la phase liquide obtenue par l'acide sulfurique.

On peut faire appel à de l'acide sulfurique concentré (98 %) ou plus dilué. On met en oeuvre de préférence un acide sulfurique de 85 à 90 %.

L'opération peut être réalisée à une température variant entre 20°C et 100°C mais de préférence entre 30°C et 50°C.

La quantité d'acide sulfurique mise en oeuvre est calculée de telle sorte qu'elle soit égale à la quantité d'acide nitrique mise en jeu.

Au cours de ce traitement, le cation métallique M précipite sous forme de son sulfate. Il s'agit d'un précipité $CaSO_4,0,5H_2O$ lorsque le cation métallique M est le calcium.

Le précipité est ensuite séparé du milieu réactionnel selon les techniques classiques de séparation liquide-solide.

On récupère une solution d'acide nitrique qui est ensuite recyclée en tête du procédé. Selon une variante de l'invention, la solution d'acide nitrique peut contenir un sel apportant des ions nitrate, notamment, un nitrate du cation métallique M.

Pour une meilleure compréhension de l'invention, on a représenté sur la figure 1 annexée un mode de réalisation préférée de l'invention.

Dans un réacteur 1, sont introduits un minerai 2 contenant un minéral porteur de terres rares et une solution d'acide nitrique 3.

Après solubilisation du minéral porteur de terres rares, on sépare en 4 si nécessaire les résidus insolubles évacués en 5.

On récupère en 6 une phase liquide comprenant essentiellement des nitrates de terres rares et les impuretés solubilisées.

On sépare en 7 les terres rares qui sont recueillies en phase aqueuse en 8.

Dans un réacteur 9, sont introduits la solution épurée de terres rares 10 et l'hydroxyde du cation métallique M 11.

On sépare en 12 les impuretés qui sont évacuées en 13.

Dans un réacteur 14, sont introduits la solution débarrassée de ses impuretés 15 et l'acide sulfurique 16.

On sépare en 17, le sulfate du cation métallique M qui est évacué en 18.

On recueille en 19 une solution d'acide nitrique qui est recyclée à l'attaque du minerai en 3.

Grâce à la combinaison de ces étapes, le procédé de l'invention est un procédé qui prend en compte l'environnement et l'économie du procédé.

Il permet de traiter des minerais de terres rares pauvres en terres rares dont la valorisation ne pouvait pas être envisagée auparavant.

On donne ci-après des exemples de réalisation de l'invention qui illustrent l'invention, sans pour autant la limiter. Dans les exemples qui suivent, les pourcentages donnés sont exprimés en poids.

Exemple 1

a) Dans cet exemple, on met en oeuvre un minerai tout venant dans lequel le minéral porteur des terres rares est une apatite.

La composition du minerai est la suivante :

- $P_2O_5$ = 2,75 %
- $Fe_2O_3$ = 5,6 %
- CaO = 7,0 %
- $SiO_2$ = 85,7 %
- $Tr_2O_3$ = 0,43 %
- $UO_3$ = 30 ppm

La répartition des terres rares est la suivante :

| | |
|---|---|
| $Y_2O_3$ : | 19,5 |
| $La_2O_3$ : | 14,5 |
| $CeO_2$ : | 33,5 |
| $Pr_6O_{11}$ : | 4,4 |
| $Nd_2O_3$ : | 13,0 |
| $Sm_2O_3$ : | 2,5 |
| $Eu_2O_3$ : | 0,25 |
| $Gd_2O_3$ : | 4,7 |
| $Tb_2O_3$ : | 0,5 |
| $Dy_2O_3$ : | 1,0 |
| $Ho_2O_3$ : | 1,8 |
| $Er_2O_3$ : | 1,8 |
| $Tm_2O_3$ : | < 0,2 |
| $Yb_2O_5$ : | 0,5 |
| $Lu_2O_3$ : | < 0,2 |
| $ThO_2$ : | 1,5 |

On met en oeuvre le procédé de l'invention selon le mode de réalisation illustré par la figure 1.

b) Dans une première étape, on réalise l'attaque du minerai par l'acide nitrique afin de solubiliser les terres rares.

Dans un réacteur 1 de 100 litres, on introduit 50 kg de minerai 2 et 25 litres de solution 3 d'acide nitrique 3,2 N contenant du nitrate de calcium $Ca(NO_3)_2$, à raison de 2,4 moles/litre.

On effectue l'opération à température ambiante (20°C) et sous agitation mécanique.

Le temps de séjour est de 30 minutes.

On sépare par filtration en 4, 46,5 kg de résidus insolubles évacués en 5.

On récupère en 6, 25 litres d'une solution contenant 8,55 g/l de terres rares exprimées en $TR_2O_3$, 50 g/l

d'acide phosphorique et 60 mg/l d'uranium exprimés en $UO_3$.

c) On sépare ensuite les terres rares en soumettant la solution précédemment obtenue à une opération d'extraction liquide-liquide conduite en suivant le mode de mise en oeuvre illustré par la figure 2.

L'appareillage utilisé comprend une batterie à plusieurs étages du type mélangeurs décanteurs fonctionnant à contre-courant et constituée d'une section d'extraction (a) et de lavage (a') comportant 7 étages théoriques et une section de contre-extraction (b) des terres rares extraites dans la phase organique comportant 5 étages théoriques.

L'agent d'extraction utilisé est le dibutylbutylphosphonate. Il est dilué à raison de 50 % en volume dans le kérosène. Ce mélange constitue le solvant d'extraction.

On introduit 25 litres de solution aqueuse 6 issue de l'étape d'attaque du minerai en 20, au 6ème étage de la batterie.

On introduit en 21, le solvant d'extraction à raison de 5 litres.

On introduit en 22 dans la section de lavage un lait de chaux à 120 g/l.

On recueille en 23, à l'entrée de la section d'extraction 26,15 litres d'une solution contenant du lanthane et du cérium à une concentration respective exprimée en oxyde de 0,9 g/l et de 1,07 g/l, mais parfaitement épuisée en autres terres rares.

On introduit en 24, en sortie de la section de contre-extraction et à contre-courant de la phase organique, 3,5 litres d' eau.

On recueille en 8, 3,5 litres d'une solution de nitrates de terres rares ayant une concentration exprimée en oxydes de terres rares de 44 g/l.

d) On effectue la purification de la solution épurée en terres rares récupérée en 23.

A cet effet, dans le réacteur 9, on introduit en 10, 26,15 litres de ladite solution et en 11, 3,5 kg d'un lait de chaux à 300 g/l.

On sépare par filtration en 12, 12,5 kg d'un résidu de phosphate humide qui est évacuée en 13.

On récupère en 15, 27,2 litres d'un filtrat contenant essentiellement du nitrate de calcium.

e) On régénère l'acide nitrique, dans une dernière étape.

Dans le réacteur 14, on introduit le filtrat 15 et 2,5 litres d'une solution aqueuse d'acide sulfurique à 88 %.

On sépare par filtration en 17, 11,5 kg de sulfate de calcium humide qui sont évacués en 18.

On récupère en 19, 25 litres d'une solution aqueuse d'acide nitrique 3,14 N contenant du nitrate de calcium 2,4 moles/litre.

Ladite solution peut être recyclée à l'attaque en 3. En effet, sa qualité a été contrôlée. Une partie aliquote de 2 litres est prélevée pour attaquer 1 kg de minerai. La solution obtenue est conforme aux résultats attendus.

f) On traite les 3,5 litres de solution purifiée de nitrates de terres rares (8) pour récupérer les terres rares, par addition de 88 g de chaux fraîchement préalablement calcinée à 950°C.

On précipite 183 g d'hydroxydes de terres rares qui sont séparés par filtration. Le filtrat de cette séparation sert au lavage du précipité obtenu en 13.

On récupère 3,5 litres d'un filtrat qui sert à la préparation du lait de chaud utilise en 22.

On peut recuperer les terres rares sous forme d'oxydes après calcination 1 heure à 700°C.

## Exemple 2

On reproduit l'exemple 1 à la différence près que l'on modifie les conditions d'extraction des terres rares.

L'appareillage utilisé comprend une batterie à plusieurs étages du type mélangeurs décanteurs fonctionnant à contre-courant et constituée d'une section d'extraction (a) et de lavage (a') comportant 5 étages théoriques et une section de contre-extraction (b) des terres rares extraites dans la phase organique comportant 5 étages théoriques.

L'agent d'extraction utilisé est le dibutylbutylphosphonate. Il est dilué à raison de 50 % en volume dans le kérosène. Ce mélange constitue le solvant d'extraction.

On introduit 25 litres de solution aqueuse 6 issue de l'étape d'attaque du minerai en 20, au 4ème étage de la batterie.

On introduit en 21, le solvant d'extraction à raison de 15 litres.

On introduit en 22 dans la section de lavage un lait de chaux à 120 g/l.

On recueille en 23, à l'entrée de la section d'extraction 26,5 litres d'une solution parfaitement épuisée en terres rares.

On effectue une contre-extraction des terres rares de la phase organique comme dans l'exemple précédent.

On recueille en 8, une solution de nitrates de terres rares ayant une concentration exprimée en oxydes de terres rares de 61 g/l.

Exemple 3

a) Dans cet exemple, on met en oeuvre un minerai contenant 30 % d'oxydes de terres rares sous forme de bastnaésite.

b) On commence par effectuer un prétraitement thermique. On calcine 113,6 g de minerai à 700°C, pendant une heure.

c) On réalise l'attaque du produit calciné à 80°C, pendant deux heures, à l'aide d'une solution aqueuse d'acide nitrique 3,2 N contenant 2,4 moles/litre de nitrate de calcium.

Après refroidissement et filtration, on obtient d'une part 60 g d'un résidu insoluble contenant 50 % du cérium initialement présent dans le minerai et d'autre part, après lavage à l'eau, 370 $cm^3$ d'une solution contenant plus de 90 % en poids des autres terres rares initiales.

d) On fait alors subir à cette solution les différents traitements décrits dans l'exemple 2 :

- une extraction liquide-liquide de la totalité des terres rares sous forme de nitrate dans une phase organique telle que décrite dans l'exemple 1 et réextraction des terres rares de la phase organique à l'eau,
- un traitement de la solution épuisée en terres rares à l'aide d'un lait de chaux, ce qui permet de séparer par filtration les impuretés métalliques et le fluor précipités,
- une régénération de la solution aqueuse d'acide nitrique par traitement à l'acide sulfurique de la solution issue de l'étape précédente,
- un recyclage de la solution aqueuse d'acide nitrique à l'étape d'attaque.

Exemple 4

a) Dans cet exemple, on traite un résidu de fabrication d'aimants néodyme/fer/bore selon le procédé de l'invention.

La composition dudit résidu est la suivante :

- Nd = 36,3 %
- Fe = 60,9 %
- B = 0,92 %
- Ca = 1,1 %
- Al = 0,34 %

b) Dans une première étape, on effectue la dissolution dudit résidu, par addition progressive de 20 g dudit résidu, dans 300 $cm^3$ d'une solution aqueuse d'acide nitrique 3,2 N, contenant 2,4 moles/-litre de nitrate de calcium.

c) Dans une deuxième étape, on sépare le néodyme par extraction quantitative à l'aide d'un solvant organique contenant du dibutylbutylphosphonate à raison de 50 % en volume dans le kérosène.

On recueille une phase aqueuse épurée en néodyme, contenant la totalité du fer, de l'aluminium et du bore.

d) Comme dans l'exemple 1, on débarrasse ladite phase aqueuse de ses impuretés, en précipitant quantitativement le fer et l'aluminium à pH 4,5 à l'aide d'un lait de chaux. On sépare par filtration le précipité d'hydroxydes desdits cations.

e) Dans une dernière étape, on régénère la solution d'acide nitrique comme dans l'exemple 1, par de l'acide sulfurique, ce qui permet ensuite le recyclage de la solution aqueuse d'acide nitrique.

Exemple 5

a) Dans cet exemple, on traite un minerai d'Anatase dans lequel le minéral porteur des terres rares est essentiellement la rhabdophanite.

La composition dudit minerai est la suivante : $TiO_2$ = 82,5 % ; $P_2O_5$ = 1,8 % ; $Fe_2O_3$ = 6,1 % ; $SiO_2$ = 3,4 % ; $Al_2O_3$ = 3,3 % ; CaO = 1 % et oxydes de terres rares = 1 %.

b) Dans une première étape, on effectue la lixiviation dudit minerai en traitant à 80°C pendant 2 heures 1,5 kg de minerai de granulométrie $\leqq$ 1 mm par un litre de solution aqueuse d'acide nitrique 4 N contenant 2 moles/litre de nitrate de calcium.

Après filtration et refroidissement, on obtient d'une part 1,4 kg de résidu sec et d'autre part après lavage à l'eau 1,05 litres de solution contenant 10,5 g/l de fer ; 7,6 g/l d'aluminium ; 2 g/l de baryum ; 0,2 g/l

de titane ; 13,6 g/l d'oxydes de terres rares et 35,2 g/l d'acide phosphorique.

c) On fait alors subir à cette solution les différents traitements décrits dans l'exemple 2 :

- une extraction liquide-liquide de la totalité des terres rares sous forme nitrate dans une phase organique telle que décrite dans l'exemple 1 et réextraction de la phase organique à l'eau,
- un traitement de la solution épuisée en terres rares à l'aide d'un lait de chaux, ce qui permet de séparer par filtration les impuretés métalliques et le phosphore précipités,
- une regeneration de la solution aqueuse d'acide nitrique par traitement à l'acide sulfurique de la solution issue de l'étape precedente,
- un recyclage de la solution aqueuse d'acide nitrique à l'étape d'attaque.

## Revendications

**1.** Procédé de traitement d'un minerai de terres rares permettant la récupération desdites terres rares, du type consistant :

(1) à effectuer la lixiviation du minerai de terres rares à l'aide d'une solution d'acide nitrique de telle sorte que l'on solubilise le minéral porteur de terres rares,
(2) à séparer les résidus insolubles si nécessaire,
(3) à séparer les terres rares de la solution issue de l'étape de lixiviation,
caractérisé en ce qu'il comprend en outre les étapes suivantes :
(4) on traite la solution épurée en terres rares par un hydroxyde d'un cation métallique M, ledit cation présentant un sel nitrate soluble et un sel sulfate difficilement soluble, ce qui conduit à la précipitation des impuretés qui ont été solubilisées à l'étape de lixiviation en même temps que le minéral porteur de terres rares, puis on sépare ledit précipité,
(5) puis on traite la solution débarrassée des impuretés par l'acide sulfurique, ce qui conduit à la précipitation d'un sulfate du cation métallique, puis on sépare ledit précipité,
(6) et enfin on recycle l'acide nitrique ainsi régénéré à l'étape (1) d'attaque du minerai de terres rares.

**2.** Procédé selon la revendication 1 caractérisé par le fait que le minerai est un minerai dont les porteurs de terres rares sont des phosphates, des fluocarbonates, des carbonates ou des silicates ou tout résidu contenant des terres rares sous formé salifiée ou métallique.

**3.** Procédé selon la revendication 1 caractérisé par le fait que le minerai mis en oeuvre est un minerai contenant de l'apatite ou un minerai contenant de la bastnaésite, après avoir subi un traitement thermique.

**4.** Procédé selon la revendication 1 caractérisé par le fait que le minerai mis en oeuvre est un résidu de fabrication d'aimants de type samarium/cobalt ou néodyme/fer/bore.

**5.** Procédé selon l'une des revendications 1 à 4 raractérisé par le fait que dans l'étape (1), la quantité d'acide nitrique est en excès par rapport à la quantité stoechiométrique des éléments à solubiliser.

**6.** Procédé selon la revendication 5 caractérisé par le fait que l'excès est compris entre 5 et 10 %.

**7.** Procédé selon l'une des revendications 1 à 6 caractérisé par le fait que l'on traite le minerai de terres rares par de l'acide nitrique, en présence d'un sel apportant des ions nitrate.

**8.** Procédé selon la revendication 7 caractérisé par le fait que ledit sel est un nitrate d'un cation métallique M.

**9.** Procédé selon la revendication 8 caractérisé par le fait que ledit sel est un nitrate de calcium.

**10.** Procédé selon l'une des revendications 1 à 9 caractérisé par le fait que la quantité de sel est ajustée de telle sorte que la phase aqueuse obtenue présente une concentration en ions nitrate supérieure à 3 et inférieure à 10 moles/litre.

**11.** Procédé selon la revendication 1 caractérisé par le fait que dans l'étape (3), on sépare les terres rares par précipitation sous forme de leur hydroxyde ou de leur carbonate.

**12.** Procédé selon la revendication 11 caractérisé par le fait que la précipitation est effectuée à l'aide d'hydroxyde de calcium.

13. Procédé selon l'une des revendications 11 et 12, caractérisé par le fait que la quantité de base est telle que le pH soit compris entre 7 et 10.

14. Procédé selon la revendication 1 caractérisé par le fait que dans l'étape (3), on sépare les terres rares par extraction liquide-liquide entre une phase aqueuse contenant les nitrates de terres rares et une phase organique contenant un agent d'extraction des terres rares, insoluble dans l'eau, puis contre-extraction des terres rares de la phase organique.

15. Procédé selon la revendication 14 caractérisé par le fait que l'agent d'extraction est un agent d'extraction anionique, solvatant ou cationique.

16. Procédé selon la revendication 15 caractérisé par le fait que l'agent d'extraction est un composé organophosphoré neutre choisi parmi les phosphates, les phosphonates, les phosphinates, les oxydes de phosphine.

17. Procédé selon la revendication 16 caractérisé par le fait que l'agent d'extraction est le tributylphosphate ou le dibutylbutylphosphonate.

18. Procédé selon l'une des revendications 14 à 17 caractérisé par le fait que la phase organique contient un diluant qui est une coupe pétrolière de type kérosène ou un mélange d'alkylbenzènes.

19. Procédé selon l'une des revendications 14 à 18 caractérisé par le fait que l'on effectue un lavage de la phase organique à l'aide d'une solution basique.

20. Procédé selon la revendication 19 caractérisé par le fait que la base utilisée est un hydroxyde ou un carbonate de cation métallique M.

21. Procédé selon la revendication 20 caractérisé par le fait que la base est l'hydroxyde de calcium.

22. Procédé selon l'une des revendications 14 à 21 caractérisé par le fait que l'on effectue une contre-extraction des terres rares de la phase organique, à l'eau.

23. Procédé selon l'une des revendications 1 à 22 caractérisé par le fait que dans l'étape (4), on traite la solution épurée en terres rares à l'aide d'un hydroxyde d'un cation métallique M en quantité telle que le pH soit compris entre 9 et 11.

24. Procédé selon la revendication 23 caractérisé par le fait que l'hydroxyde de de cation métallique M est l'hydroxyde de calcium ou son précurseur.

25. Procédé selon la revendication 23 caractérisé par le fait que le traitement est effectué entre 70°C et 90°C.

26. Procédé selon l'une des revendications 1 à 25 caractérisé par le fait que dans l'étape (5), on traite la solution débarrassée des impuretés après séparation, à l'aide d'acide sulfurique ayant une concentration de 85 à 98 % en poids.

27. Procédé selon la revendication 26 caractérisé par le fait que l'opération est effectuée entre 30°C et 50°C.

## Patentansprüche

1. Verfahren zur Behandlung eines Seltene Erden enthaltenden Erzes zur Gewinnung dieser Seltenen Erden, das darin besteht, daß man:
   (1) das SE-enthaltende Erz mit einer Salpetersäurelösung extrahiert und das SE-Mineral in Lösung bringt,
   (2) wenn erforderlich, die unlöslichen Rückstände abtrennt,
   (3) die Seltenen Erden aus der in der Extraktionsstufe erhaltenen Lösung abtrennt,
   dadurch gekennzeichnet, daß es zusätzlich folgende Stufen umfaßt:
   (4) man behandelt die von Seltenen Erden gereinigte Lösung mit einem Hydroxid eines Metallkations

M, das ein lösliches Nitratsalz und ein schwer lösliches Sulfatsalz bildet, was zur Ausfällung der Verunreinigungen führt, die in der Extraktionsstufe gleichzeitig mit dem SE-Mineral in Lösung gegangen sind, und anschließend diesen Niederschlag abtrennt,
(5) darauf behandelt man die von den Verunreinigungen befreite Lösung mit Schwefelsäure, was zur Ausfällung eines Sulfats des Metallkations führt, und trennt dann diesen Niederschlag ab,
(6) schließlich führt man die so regenerierte Salpetersäure in die Stufe (1) des Aufschlusses des Seltene Erden enthaltenen Erzes zurück.

2. Verfahren nach Anspruch 1, dadurch gekennzeichnet, daß das Erz ein Erz ist, dessen Träger von Seltenen Erden Phosphate, Fluorcarbonate, Carbonate oder Silicate oder jeglicher Rückstand, der Seltene Erden in Salz- oder Metallform enthält, sind/ist.

3. Verfahren nach Anspruch 1, dadurch gekennzeichnet, daß das eingesetzte Erz ein Erz ist, welches Apatit enthält, oder ein Erz, welches Bastnäsit enthält, nachdem es einer thermischen Behandlung unterworfen worden ist.

4. Verfahren nach Anspruch 1, dadurch gekennzeichnet, daß das eingesetzte Erz ein Rückstand aus der Magnetherstellung vom Typ Samarium/Cobalt oder Neodym/Eisen/Bor ist.

5. Verfahren nach einem der Ansprüche 1 bis 4, dadurch gekennzeichnet, daß in der Stufe (1) die Salpetersäure im Überschuß über die stöchiometrische Menge der Elemente, welche in Lösung gebracht werden sollen, vorhanden ist.

6. Verfahren nach Anspruch 5, dadurch gekennzeichnet, daß der Überschuß 5 bis 10% ausmacht.

7. Verfahren nach einem der Ansprüche 1 bis 6, dadurch gekennzeichnet, daß man das Seltene Erden enthaltende Erz mit Salpetersäure in Gegenwart eines Nitrationen-liefernden Salzes behandelt.

8. Verfahren nach Anspruch 7, dadurch gekennzeichnet, daß das Salz ein Nitrat eines Metallkations M ist.

9. Verfahren nach Anspruch 8, dadurch gekennzeichnet, daß das Salz Calciumnitrat ist.

10. Verfahren nach einem der Ansprüche 1 bis 9, dadurch gekennzeichnet, daß die Salzmenge so eingestellt wird, daß die erhaltene wäßrige Phase eine Nitrationen-Konzentration von mehr als 3 mol/l und weniger als 10 mol/l aufweist.

11. Verfahren nach Anspruch 1, dadurch gekennzeichnet, daß man in der Stufe (3) die Seltenen Erden abtrennt, indem man sie als Hydroxide oder als Carbonate ausfällt.

12. Verfahren nach Anspruch 11, dadurch gekennzeichnet, daß man die Ausfällung mit Calciumhydroxid vornimmt.

13. Verfahren nach einem der Ansprüche 11 und 12, dadurch gekennzeichnet, daß die Menge der Base einem pH-Wert im Bereich von 7 bis 10 entspricht.

14. Verfahren nach Anspruch 1, dadurch gekennzeichnet, daß man in der Stufe (3) die Seltenen Erden durch flüssig/flüssig-Extraktion zwischen einer wäßrigen Phase, die die Nitrate der Seltenen Erden enthält, und einer organischen Phase, die ein in Wasser unlösliches Extraktionsmittel für die Seltenen Erden enthält, und dann durch Gegenextraktion der Seltenen Erden aus der organischen Phase abtrennt.

15. Verfahren nach Anspruch 14, dadurch gekennzeichnet, daß das Extraktionsmittel ein anionisches, solvatisierendes oder kationisches Extraktionsmittel ist.

16. Verfahren nach Anspruch 15, dadurch gekennzeichnet, daß das Extraktionsmittel eine neutrale Organophosphor-Verbindung, ausgewählt aus den Phosphaten, Phosphonaten, Phosphinaten und Phosphinoxiden, ist.

17. Verfahren nach Anspruch 16, dadurch gekennzeichnet, daß das Extraktionsmittel Tributylphosphat oder Dibutylbutylphosphonat ist.

18. Verfahren nach einem der Ansprüche 14 bis 17, dadurch gekennzeichnet, daß die organische Phase ein

Verdünnungsmittel enthält, das eine Erdölfraktion vom Typ Kerosin oder ein Gemisch von Alkylbenzolen ist.

19. Verfahren nach einem der Ansprüche 14 bis 18, dadurch gekennzeichnet, daß man die organische Phase mit einer basischen Lösung wäscht.

20. Verfahren nach Anspruch 19, dadurch gekennzeichnet, daß die verwendete Base ein Hydroxid oder ein Carbonat des Metallkations M ist.

21. Verfahren nach Anspruch 20, dadurch gekennzeichnet, daß die Base Calciumhydroxid ist.

22. Verfahren nach einem der Ansprüche 14 bis 21, dadurch gekennzeichnet, daß man die Seltenen Erden aus der organischen Phase mit Wasser rückextrahiert.

23. Verfahren nach einem der Ansprüche 1 bis 22, dadurch gekennzeichnet, daß man in der Stufe (4) die an Seltenen Erden gereinigte Lösung mit einem Hydroxid eines Metallkations M in solcher Menge behandelt, daß der pH-Wert im Bereich von 9 bis 11 liegt.

24. Verfahren nach Anspruch 23, dadurch gekennzeichnet, daß das Hydroxid des Metallkations M Calciumhydroxid oder sein Vorläufer ist.

25. Verfahren nach Anspruch 23, dadurch gekennzeichnet, daß man die Behandlung bei 70°C bis 90°C durchführt.

26. Verfahren nach einem der Ansprüche 1 bis 25, dadurch gekennzeichnet, daß man in der Stufe (5) die von den Verunreinigungen befreite Lösung nach Abtrennung mit einer 85 bis 98 gew.-%igen Schwefelsäure behandelt.

27. Verfahren nach Anspruch 26, dadurch gekennzeichnet, daß man die Behandlung bei 30°C bis 50°C durchführt.

## Claims

1. Process for the treatment of a rare-earth ore permitting the recovery of the said rare earths, of the type consisting:
(1) in carrying out the leaching of the rare-earth ore with the aid of a nitric acid solution so that the mineral bearing the rare earths is solubilised,
(2) in separating off the insoluble residues if necessary,
(3) in separating the rare earths from the solution originating from the leaching stage,
characterised in that it furthermore comprises the following stages:
(4) treating the solution purified in respect of rare earths with a hydroxide of a metal cation M, the said cation having a soluble nitrate salt and a sparingly soluble sulphate salt, which results in the precipitation of the impurities which were solubilised at the leaching stage at the same time as the mineral bearing the rare earths, and then separating off the said precipitate,
(5) then treating the solution which has been freed from the impurities with sulphuric acid, which results in the precipitation of a sulphate of the metal cation, and then separating off the said precipitate,
(6) and recycling the nitric acid thus regenerated to the stage (1) of digestion of the rare-earth ore.

2. Process according to Claim 1, characterised in that the ore is an ore in which the rare-earth carriers are phosphates, fluorocarbonates, carbonates or silicates or any residue containing rare earths in salt or metal form.

3. Process according to Claim 1, characterised in that the ore used is an ore containing apatite or an ore containing bastnaesite, after having undergone a heat treatment.

4. Process according to Claim 1, characterised in that the ore used is a residue from the manufacture of magnets of the samarium/cobalt or neodymium/iron/boron type.

5. Process according to one of Claims 1 to 4, characterised in that, in stage (1), the quantity of nitric acid is

in excess relative to the stoichiometric quantity of the elements to be solubilised.

6. Process according to Claim 5, characterised in that the excess is between 5 and 10 %.

7. Process according to one of Claims 1 to 6, characterised in that the rare-earth ore is treated with nitric acid in the presence of a salt contributing nitrate ions.

8. Process according to Claim 7, characterised in that the said salt is a nitrate of a metal cation M.

9. Process according to Claim 8, characterised in that the said salt is a calcium nitrate.

10. Process according to one of Claims 1 to 9, characterised in that the quantity of salt is adjusted so that the aqueous phase obtained has a concentration of nitrate ions which is higher than 3 and lower than 10 moles/litre.

11. Process according to Claim 1, characterised in that, in stage (3), the rare earths are separated off by precipitation in the form of their hydroxides or of their carbonates.

12. Process according to Claim 11, characterised in that the precipitation is carried out with the aid of calcium hydroxide.

13. Process according to either of Claims 11 and 12, characterised in that the quantity of base is such that the pH is between 7 and 10.

14. Process according to Claim 1, characterised in that, in stage (3), the rare earths are separated off by liquid-liquid extraction between an aqueous phase containing the rare-earth nitrates and an organic phase containing a water-insoluble extraction agent for the rare earths, followed by counterextraction of the rare earths from the organic phase.

15. Process according to Claim 14, characterised in that the extraction agent is an anionic, solvating or cationic extraction agent.

16. Process according to Claim 15, characterised in that the extraction agent is a neutral organophosphorus compound chosen from phosphates, phosphonates, phosphinates and phosphine oxides.

17. Process according to Claim 16, characterised in that the extraction agent is tributyl phosphate or dibutyl butylphosphonate.

18. Process according to one of Claims 14 to 17, characterised in that the organic phase contains a diluent which is a petroleum cut of the kerosene type or a mixture of alkylbenzenes.

19. Process according to one of Claims 14 to 18, characterised in that a washing of the organic phase is carried out with the aid of basic solution.

20. Process according to Claim 19, characterised in that the base employed is a hydroxide or a carbonate of metal cation M.

21. Process according to Claim 20, characterised in that the base is calcium hydroxide.

22. Process according to one of Claims 14 to 21, characterised in that a counterextraction of the rare earths from the organic phase is carried out using water.

23. Process according to one of Claims 1 to 22, characterised in that, in stage (4), the solution purified in respect of rare earths is treated with the aid of a hydroxide of a metal cation M in such quantity that the pH is between 9 and 11.

24. Process according to Claim 23, characterised in that the hydroxide of metal cation M is calcium hydroxide or its precursor.

25. Process according to Claim 23, characterised in that the treatment is carried out between 70°C and 90°C.

26. Process according to one of Claims 1 to 25, characterised in that, in stage (5), the solution freed from the impurities after separation is treated with the aid of sulphuric acid at a concentration of 85 to 98 % by weight.

27. Process according to Claim 26, characterised in that the operation is carried out between 30°C and 50°C.

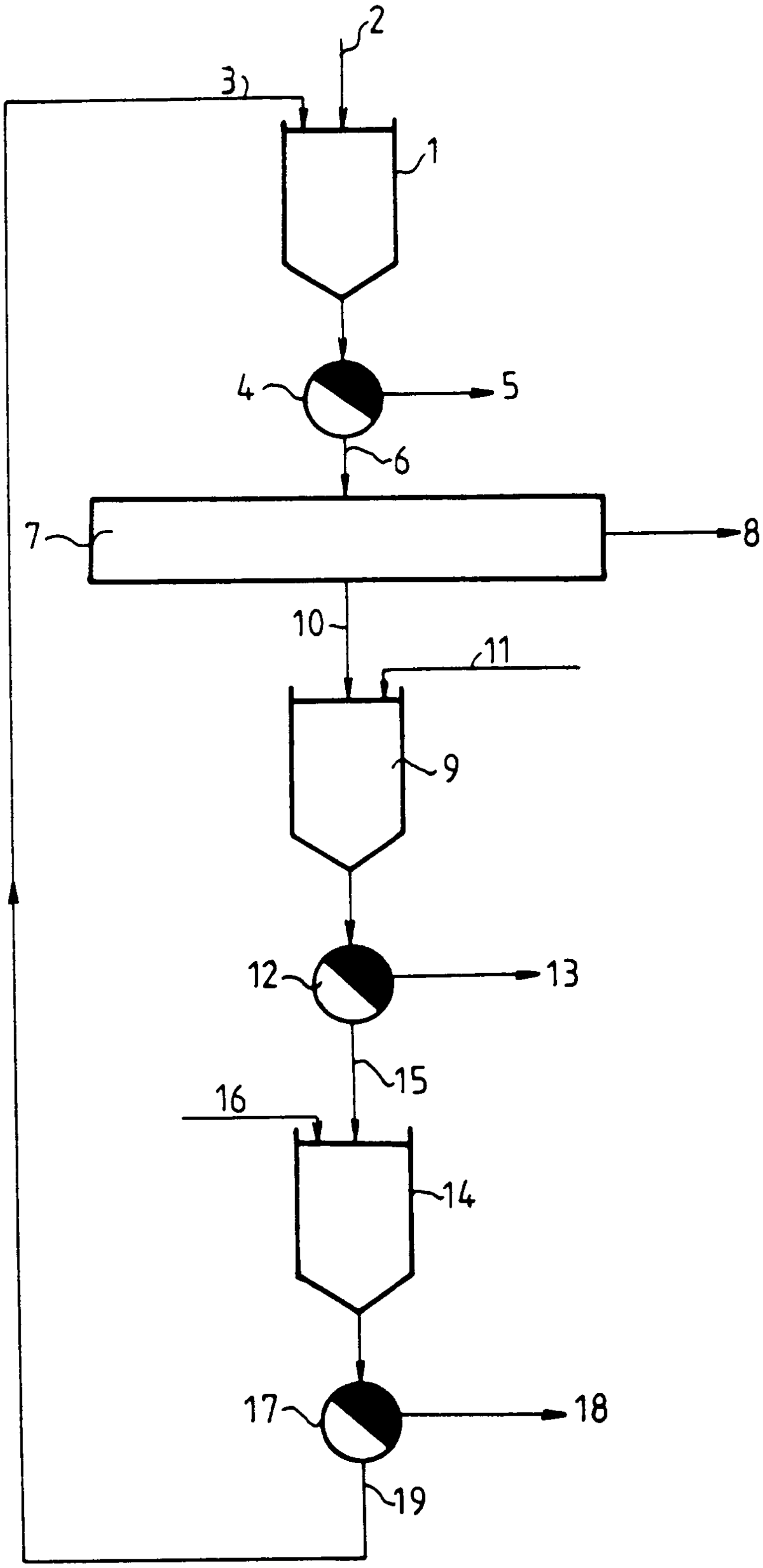


FIG.1

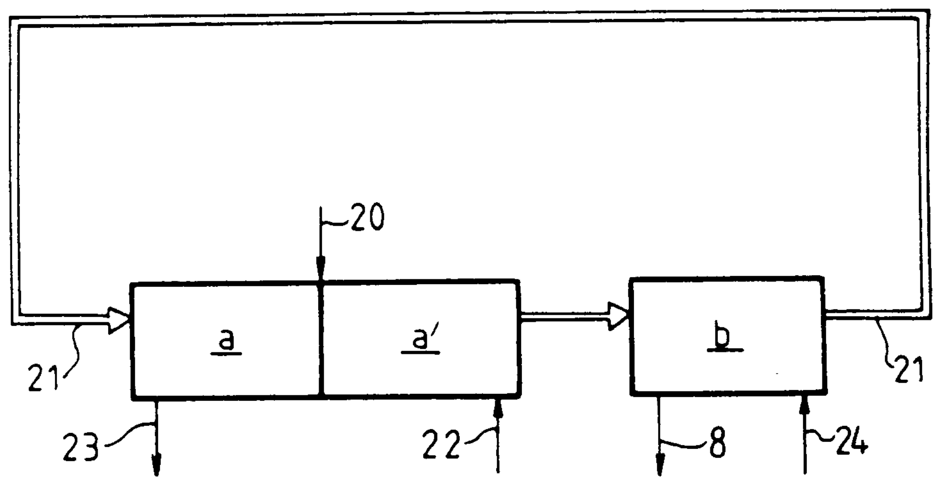


FIG.2